# EUROPEAN PATENT SPECIFICATION

(11) **EP 0 633 675 B1**
(45) Date of publication and mention of the grant of the patent: **22.03.2000**
(21) Application number: 94201930.8
(22) Date of filing: 05.07.1994
(51) Int. Cl.: H04J 3/04

(54) **A telecommunications network and a main station and a substation for use in such a network**
Telekommunikationsnetzwerk, Hauptstation und Nebenstation zum Gebrauch in solchem Netzwerk
Un réseau de télécommunication et une station principale et une station secondaire pour l'usage dans un tel réseau

(30) Priority: 09.07.1993 EP 93202019
(43) Date of publication of application: 11.01.1995
(73) Proprietor: Koninklijke Philips Electronics N.V., 5621 BA Eindhoven (NL)
(72) Inventor: Snijders, Wilfred Andre Maria, NL-5656 AA Eindhoven (NL); Van Grinsven, Petrus Augustinus Maria, NL-5656 AA Eindhoven (NL)
(74) Representative: Mak, Theodorus Nicolaas

(56) References cited:
- WO-A-89/05078
- DE-A- 3 144 801
- TELEFON REPORT SIEMENS, vol.9, no.3, May 1986, MUNCHEN DE pages 190 - 197 HEINZ BEETZ ET AL. 'Neue Multiplexergeneration zur Übertragung von Digitalsignalen von 2 bis 565 Mbit/s'

## Description

The present invention relates to a telecommunications network comprising a main station and a plurality of substations, in which network communication between the main station and the substations occurs in a data-frame with a predetermined bit rate via a transmission channel on the basis of a multiple access protocol, which channel is at least partially common to the substations. Such a telecommunications network can be a passive optical network.

The present invention further relates to a main station for use in such a network.

The present invention further relates to a substation for use in such a system.

A telecommunications network of this kind is known from the article, "The provision of telephony over passive optical networks", C.E. Hoppitt and D.E.A. Clarke, Br. Telecom Technol. Journal, Vol. 7, No. 2, April 1989, pp. 100-114, in which a TPON (Telephony on a Passive Optical Network) is disclosed comprising a head-end station or exchange termination as a main station, broadcasting TDMA (Time Division Multiple Access) frames to a number of terminations on an optical transmission channel or glass fibre in a downstream direction. A single fibre is fed from the exchange and fanned out via passive optical splitters at a cabinet and distribution point positions to feed to the terminations. In an upstream direction, each termination transmits data in a predetermined time slot and the data from the different terminations interleave at the head-end into a TDMA frame of a predetermined format. Several variants of terminations are described, such as "House terminations" (fibre-to-the home) for individual subscribers, "Business terminations" (fibre-to-the-building) for small business customers having a number of subscriber lines coupled to the termination, or "Street TPON termination" (fibre-to-the-curb), the latter being quite similar to the "Business termination" apart from the fact that "copper lines" are fed to individual subscribers. Such a network is generally referred to as a BTS (Bit Transport System), the exchange termination being referred to as a BTS-Master and the terminations being referred to as ONUs (Optical Network Units). In known optical network the bit rate typically is 20.48 Mbit/s, or 20 Mbit/s for short. Such a network capacity is suitable for transporting 8 interleaved 2 Mbit/s streams, e.g. each stream transporting 30 speech channels of 64 kbit/s. Apart from speech data or other subscriber data the 20 Mbit/s datastream comprises overhead data for controlling purposes, such as housekeeping data to control the operation of the BTS, laser power level, multiplexing, or the like. In such networks there is a demand for still higher capacities, from a marketing point of view or for higher bit rate demands for supporting new evolutionary services. But with higher bit rates, the network complexity increases as does the power dissipation. Also, upgrading terminations for supporting higher bit rates would require a technological leap forward as, due to passive splitting, processing in the terminations has to be done at the higher bit rate. This leads to a considerably more expensive network, in which especially the substations or ONUs considerably contribute to the overall network costs.

It is an object of the present invention to provide a telecommunications network of the above kind which is capable of handling higher bit rates with only a moderate increase of the overall network complexibility, especially at the side of the network terminations.

To this end a telecommunications network according to the present invention is characterised in that the main station comprises means for splitting data intended for substations into at least two logical sub-frames, and means for assembling the sub-frames into the data-frame such that the data-frame comprises a bit interleaved composition of sub-frames and for assembling substation characterising data into the data-frame, whereby the data intended for a particular substation are put into a particular sub-frame, and in that the substations comprise means for adjusting themselves to reception of data in the sub-frame intended for them on the basis of the substation characterising data. It is achieved that with a much higher network capacity, the substations are hardly modified as compared to lower bit rate optical networks. In the substations only some hardware has to operate on the higher bit rate, such as a front end, a laser driver, and a clock recovery circuit, whereas most other circuitry can still operate at the lower bit rate of prior networks. Also, the main station is simpler as compared to a network simply operating at a higher bit rate.

The present invention is based upon the insight that typically the bandwidth needs of an individual substation lie between a few hundred kbit/s to a maximum of 2-4 Mbit/s. Since an individual substation uses only a fraction of the total system capacity, there is hardly any loss in functionality if a substation can access only part of the transmission channel at a network level. E.g. for a splitting into two sub-frames of substation data at the side of the main station, the substation can only access the 'odd' or 'even' sub-frame. Functionally, such a 'twin'-system can then be considered as two 'half rate' or 20 Mbit/s systems in parallel serving 'odd' and 'even' 20 Mbit/s substations via a common fibre.

In an embodiment of the network according to the present invention, the substations are arranged to send data to the main station in a time slot within the data-frame at a position corresponding to their adjustment with respect to the received data from the main station, and wherein the main station comprises means for dis-assembling bit interleaved data in the data-frame to at least two logical sub-frames of data from particular substations, and comprises means for combining the sub-frames. It is achieved that the main station as well as the substations operate in a bit interleaved way as according to the present invention. For achieving that the substations transmit in time slots as assigned to by the main station the substations are ranged. Such ranging is described inter alia in EP-A-0 616 444 and EP-A-0 616 443, both filed on 15.3.93 and published on 21.09.94.

In an embodiment of the network according to the present invention, the means for assembling and dis-assembling are separate means operating at the predetermined bit rate divided by n, n being the number of logical sub-frames, the logical sub-frames being physical sub-frames, and wherein the means for splitting and combining are operating at the predetermined bit rate. In this embodiment a high bit rate datastream is split in the main station into a number of channels, which are thereafter multiplexed on the transmission channel or fibre. It is achieved that in the main station channel operations such as scrambling can still be done at a lower bit rate.

In another embodiment of the network according to the present invention, the means for assembling and dis-assembling, and the means for splitting and combining are integrated means operating at the predetermined bit rate. With such integrated means it is advantageous that no separate frame assemblers are required, although with an increased complexity of the frame assembler.

In a further embodiment of the network according to the present invention, the substation characterising data comprise a general synchronisation word followed by a substation type identifier. It is achieved that the substations first can synchronise on the synchronisation word in a usual way and can than simply adjust their time to the correct phase in the interleaved bitstream so as to listen only to a part of the data stream intended for them.

In a still further embodiment of the network according to the present invention, the substations adjust themselves to a particular phase in the bit interleaved composition of sub-frames on the basis of phase adjustment data received from the main station in a housekeeping time slot. It is achieved that the substations are remotely adjustable by the main station so as to listen to another phase in the interleaved bitstream. Thus, when the network is operational, the network load can advantageously be optimised. This plays a role if the network is almost loaded to it maximum capacity and there is still capacity left for a relatively high capacity substation, though not in one sub-frame. The main station then reconfigures the network automatically by redirecting smaller substations to other sub-frames and by assigning the high capacity substation to the sub-frame into which capacity was so released.

The present invention will now be described, by way of example, with reference to the accompanying drawings, wherein
Fig. 1 schematically shows a telecommunications network according to the present invention,
Fig. 2 shows multiplexer timing in a main station,
Fig. 3 shows a main station for use in the network according to the present invention
Fig. 4 shows a substation for use in the network according to the present invention,

Throughout the figures the same reference numerals are used for the same features.

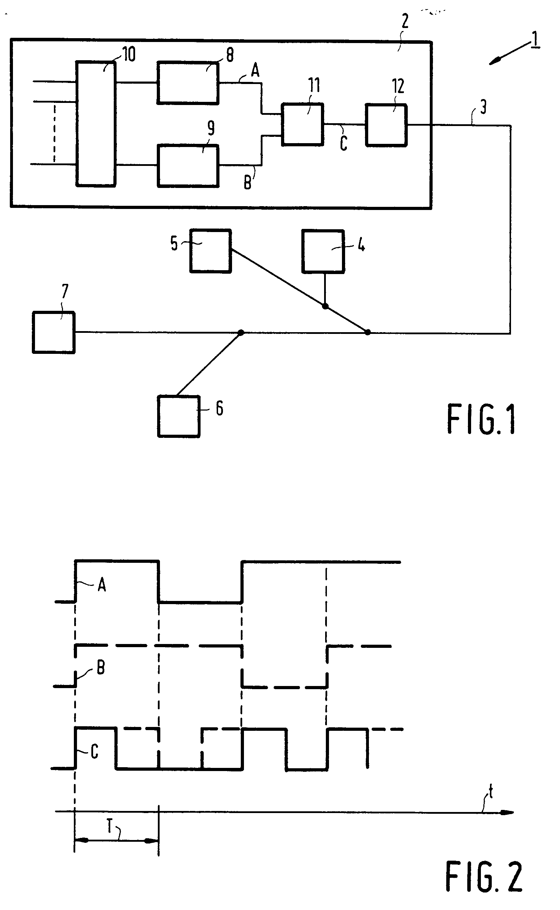

Fig. 1 schematically shows a passive optical network 1 as a telecommunications network according to the present invention comprising a main station 2 communicating via a transmission channel 3 with a plurality of substations 4, 5, 6 and 7. In practice there can be numerous substations. The channel 3, which at least partially is common to the substations 4 to 7, is a glass fibre cable. The main station 2 can be a local telephone exchange and to the substations 4 to 7 a subscriber or a group of subscribers have access to various services such as telephone, facsimile and telex. In the latter case the network is a so-called TPON (Telephone Passive Optical Network). In a PON splitting and combining of optical signals on the channel for transport of information to and from the main station 2 is well-known. For details referred is to said article of Hoppitt et al. At page 109 of the Hoppitt article, in Fig. 12 a downstream data-frame in a TPON-system is shown, and in Fig. 13 an upstream data-frame. In these data-frames synchronisation patterns are disclosed in the downstream data-frame, and ranging bits in the upstream data-frame. At page 110 of the Hoppitt article, in Fig. 14 a housekeeping frame is shown which is a part of the downstream frame. The frame structure of the present invention is a modified frame structure of bit interleaved sub-frames to be described in the sequel. In the passive optical network 1 a multiple access protocol based communication between the main station 2 and the substations 4 to 7 occurs, such as TDMA (Time Division Multiple Access), well-known in the art. In such a network 1 the main station 2, being a master controlling the system 1, transmits TDMA-frames to the substations 4 to 7, in a so-called downstream direction, whereas the substations 4 to 7 transmit information in an upstream direction to the main station 2. Data on the fibre cable with a predetermined bit rate are perceived by all substations 4 to 7 with the same bit rate because of the passive splitting of the fibre cable 3. According to the present invention, the main station 2 comprises means for splitting data intended for the substations 4 to 7 into at least two logical sub-frames and means for assembling the sub-frames into the data-frame to be transmitted over the fibre cable 3 in downstream direction. In Fig. 1 the means for splitting data, which will be showed in more detail in the sequel, are comprised in an 'even channel' 8 and an 'odd channel' 9 coupled to an interface 10 for coupling to PCM links of the PSTN (Public Switched Telephone Network). In the given example it is assumed that two sub-frames of data intended for particular substations are built, but more generally n subframes, n being an integer greater than or equal to two, are built. Then, the means for splitting split the data into n sub-frames. In this context 'channel' means processing of data suitable for transmission over the fibre cable 3, i.e. including frame assembling and addition of housekeeping data or the like. A multiplexer part in the (de)multiplexer 11 forms means for assembling the sub-frames into the data-frame such that the data-frame comprises a bit interleaved composition of sub-frames. In the given example the two sub-frames are bit interleaved. The (de)multiplexer 11 also assembles substation characterising data into the data-frame, in the given example a given synchronisation word for 'even channel' substations and an inversed synchronisation word for 'odd channel' substations. In one embodiment, the substations 4 to 7 are adjusted automatically on the basis of phase adjustment data transmitted by the main station 2 to the substations as housekeeping data. The phase adjustment data inform the respective substations to which phase in the bit interleaved composition of sub-frames are going to listen. In operation the sub-stations adjust themselves to the correct phase in the interleaved bitstream at the fibre 3 on the basis of substation characterising data in the interleaved bitstream. It is thus essential that there are 'odd' and 'even' substations in the network 1, or more generally n different types of substations, from a logical point of view. In fact, each substation 4 to 7 is adjustable as an 'odd' or 'even' substation. In upstream direction, when the substations 4 to 7 are ranged in as usual, the substations transmit data to the main station 2 at positions corresponding to the downstream data-frame, i.e. in a bit interleaved way. In the main station 2 means for dis-assembling are comprised in the (de)multiplexer 11, which builds sub-frames of data from particular substations. Means for combining these sub-frames are comprised in the 'even' and 'odd channels' 8 and 9, and in the interface 10. In case n=2, the network 1 according to the present invention can be apprehended as two 'half rate' e.g. 20 Mbit/s systems in parallel serving 'odd' and 'even' substations via the same glass fibre 3. From a logical point of view, the substations 4 to 7 operate at 20 Mbit/s, then, whereas the bit rate on the fibre 3 is 40 Mbit/s. I.e., from a network point of view, the capacity is doubled.

Fig. 2 shows multiplexer timing in the main station 2 of the (de)multiplexer 11 as a function of time t. A period T corresponds to non-interleaved transmission of data-frames, e.g. 20 Mbit/s. Signals A, B, and C are shown as indicated in Fig. 1, for n=2. In downstream direction the 20 Mbit/s sub-frames of the 'odd' and 'even channels' 8 and 9 are assembled separately and multiplexed as T/2 pulses in the main station 2 just in front of a laser transmitter 12. As a result a 40 Mbit/s transmission rate in the PON is achieved while in one embodiment each the channels in the main station operates at 20 Mbit/s. Only the laser transmitter 12 in the main station 2, a receiver front-end in the substations and their clock recovery circuits are operating at the higher bit rate of 40 Mbit/s. The substations 4 to 7 select either the 'odd bits' or the 'even bits', depending how they are adjusted. Although advantageously the substations 4 to 7 are adjusted automatically because of automatic adjustment to a varying traffic load, they may also be adjusted manually. In the latter case, the substations 4 to 7 are provided with manual adjusting means. In the upstream direction, the substations send T/2 pulses at a rate of 20 Mbit/s. Thus, all logic to assemble the upstream data-frame operates at a rate associated with a 20 Mbit/s data rate. The resulting bitstream of all substations is a 40 Mbit/s bitstream in upstream direction. In the main station 2 only a front end and the means for dis-assembling are arranged to process the 40 Mbit/s bitstream on the fibre 3. Further processing is done so as to process 20 Mbit/s bitstreams, as usual.

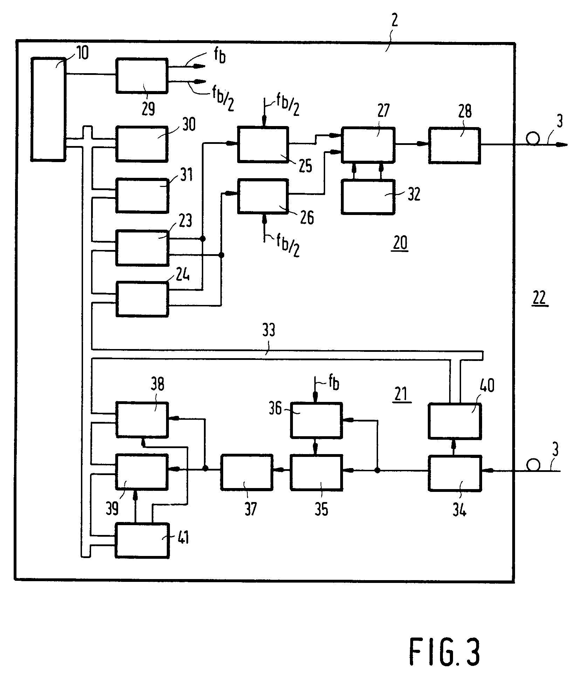

Fig. 3 shows a main station 2 for use in network 1 according to the present invention suitable for transmission and reception of TDMA signals. The main station 2 comprises a transmitter branch 20 and a receiver branch 21 coupled to a transmission channel 22. In the transmitter branch 20 subscriber signals for various substations are fed from the exchange interface 10 to a data buffer 23. The transmitter branch 20 further comprises a housekeeping buffer 24. In the given example, for n=2, data for the 'odd channel' are scrambled in a scrambler 25 and data for the 'even channel' are scrambled in a scrambler 26. Thus two sub-frames are built, which are fed to a frame multiplexer 27 so as to form a bit interleaved composition of sub-frames. This composition is fed to a laser transmitter 28, which is coupled to the fiber 3. The 'even' and 'odd channels' are clocked with f_{b}/2, f_{b} being a master clock generated in the timing circuit 29. The main station 2 further comprises a processing unit 30 and a ROM/RAM memory 31, the memory being programmed to control the sub-frame building as according to the present invention. The data-frame to be transmitted comprises synchronisation words, which are put into the data-frame by a synchronisation word generator 32. In case n=2, in an advantageous embodiment, the synchronisation words for the 'even channel' and the 'odd channel' are inversed ones, so that the substations can easily synchronise on the respective 'even' and 'odd channel'. The various processing units are coupled to a databus 33. The multiplexed signal may comprise coarse and fine ranging control information for ranging substations. Signals from the substations 4 to 7 are received by a front end receiver 34, an output of which is coupled to a bit regenerator circuit 35 and to phase adjusting means 36. Since substations transmit with a recovered clock only phase adjustment is required to align the regenerator 35 with the received data. An output of the bit regenerator circuit 35 is fed to a frame dis-assembling circuit 37. Then, the received subscriber data and housekeeping data are stored in a respective data buffer 38 and a housekeeping buffer 39. The received data are fed to the interface 10, e.g. to the PSTN via PCM links. For ranging purposes the main station 2 comprises a ranging circuit 40 coupled to the front end receiver 34, which receives ranging information from the substations when they are requested by the main station in a ranging phase to send such information. Suitable ranging circuitry and algorithms are described inter alia in said European Application Nrs. 93200743.8 and 93200742.0. In an embodiment two completely separate branches for the 'even' and 'odd channel' can be used having regenerators with 180° shifted clock phases. In another embodiment the branches can be combined in a single DMA/buffer architecture, controlled by a DMA controller 41.

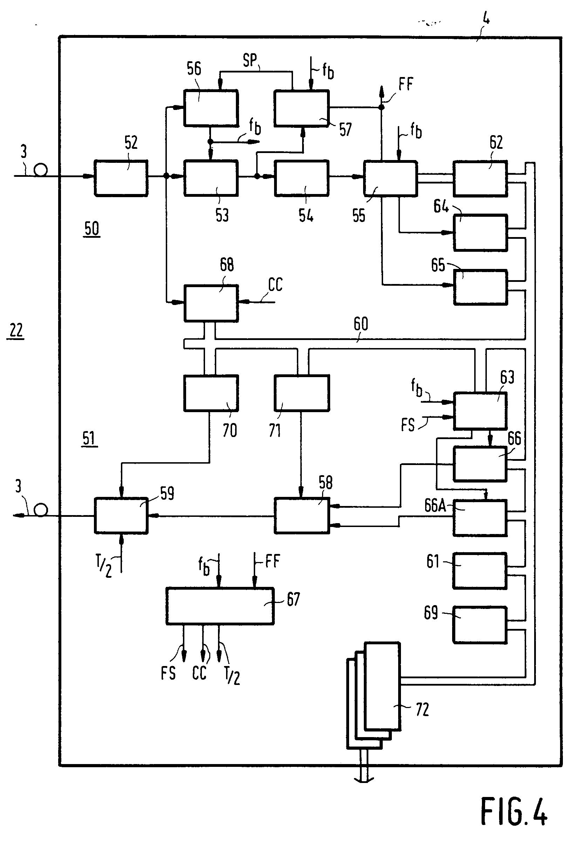

Fig. 4 shows a substation 4 for use in the network 1 according to the present invention. The substation 4 comprises a receiver branch 50 and a transmitter branch 51 coupled to the transmission channel 22, which is the fiber 3. The receiver branch 50 comprises a series arrangement of a front end receiver 52, a bit regenerator 53, a de-scrambler 54, and a frame dis-assembler 55. At a front end receiver output a clock is recovered by means of a clock recovery circuit 56, whereas a sync detector 57 is coupled with an output of the bit regenerator 53. The transmitter branch 51 comprises a series arrangement of an adjustable delay line 58, for adjusting the substation 4 to the correct time slot in the upstream frame, and a laser transmitter 59. The 'odd/even' adjustment in the transmitter branch 51 can simply be done by adjusting an additional phase shift of half a bit period in the delay line 58, in case n=2. Then, the laser transmitter 59 converts the 20 Mbit/s pulses into half width optical pulses. Functionally, the substations 4 to 7 operate similar to the main station 2, as far as transmission and reception is concerned. For controlling the substation 4, the substation comprises various units coupled to a databus, under control of a processor 61 and/or DMA controllers 62 and 63. In the receiver branch 50 a data buffer 64 and a housekeeping buffer 65 is provided, and in the transmitter branch 51 a data buffer 66 and a housekeeping buffer 66A. Furthermore the substation comprises a timing circuit 67 fed by a recovered clock signal f_{b} and a sync signal FF, the timing circuit 67 providing a timing signal FS for the DMA controller 63, a timing signal T/2 for the laser transmitter 59, and a timing signal CC for an analog-digital converter 68. The substation 4 comprises a ROM/RAM memory 69 programmed for controlling the substation 4 according to the present invention. The A/D-converter provides power control information and ranging information to a respective power control latch 70 and after processing to a ranging latch 71. Data received in the substation 4 is transported to individual subscriber via line cards 72. In case n is greater than 2, a substation can adjust itself to the correct phase in the interleaved datastream received from the main station 2 by first synchronising itself to a common synchronisation word and than adjust its phase on the basis of a channel indicator following the sync word. In case n=4, the phases are 0°, 90°, 180°, and 270°. Phase setting is done with a phase adjustment signal SP gained from the sync detector 57. A substation according to the present invention differs from a usual substation in that only the laser transmitter, the receiver front end, and the clock recovery circuit operate at the higher bit rate. Thus, a substation suitable to be coupled in a higher bit rate network is hardly more expensive than a usual substation and hardly consumes more power.

## Claims

1. A telecommunications network (1) comprising a main station (2) and a plurality of substations (4 to 7), in which network (1) communication between the main station (2) and the substations (4 to 7) occurs in a data-frame with a predetermined bit rate via a transmission channel (3; 22) on the basis of a multiple access protocol, which channel (22) is at least partially common to the substations (4 to 7), characterised in that the main station (2) comprises means for splitting data (30, 31, 25, 26) intended for substations into at least two logical sub-frames, and means for assembling (27) the sub-frames into the data-frame such that the data-frame comprises a bit interleaved composition of sub-frames and for assembling substation characterising data into the data-frame, whereby the data intended for a particular substation are put into a particular sub-frame, and in that the substations comprise means for adjusting themselves (56, 57) to reception of data in the sub-frame intended for them on the basis of the substation characterising data.

2. A network (1) according to claim 1, wherein the substations (4 to 7) are arranged to send data to the main station (2) in a time slot within the data-frame at a position corresponding to their adjustment with respect to the received data from the main station, and wherein the main station (2) comprises means for dis-assembling (55, 61, 69) bit interleaved data in the data-frame to at least two logical sub-frames of data from particular substations, and comprises means for combining (61, 69) the sub-frames.

3. A network (1) according to claim 2, wherein the means for assembling and dis-assembling are separate means operating at the predetermined bit rate divided by n, n being the number of logical sub-frames, the logical sub-frames being physical sub-frames, and wherein the means for splitting and combining are operating at the predetermined bit rate.

4. A network (1) according to claim 2, wherein the means for assembling and dis-assembling, and the means for splitting and combining are integrated means operating at the predetermined bit rate.

5. A network according to any one of the claims 1 to 4, wherein the substation characterising data comprise a general synchronisation word followed by a substation type identifier.

6. A network according to any one of the claims 1 to 4, wherein the number of logical sub-frames is two, and wherein the substation characterising data is a first synchronisation word for a first type of substation and is a second synchronisation word for a second type of substation, the second synchronisation word being the inverse of the first synchronisation word.

7. A network according to any one of the claims 1 to 6, wherein the substations adjust themselves to a particular phase in the bit interleaved composition of sub-frames on the basis of phase adjustment data received from the main station in a housekeeping time slot.

8. A main station (2) for use in a telecommunications network (1) adapted for communication of data in a data-frame with a predetermined bit rate to substations (4 to 7) within the network (1) via a transmission channel (22) on the basis of a multiple access protocol (TDMA), which channel (22) is at least partially common to the substations (4 to 7), characterised in that the main station (2) comprises means for splitting data (25, 26) intended for substations into at least two logical sub-frames, and means for assembling (27) the sub-frames into the data-frame such that the data-frame comprises a bit interleaved composition of sub-frames and for assembling substation characterising data into the data-frame, whereby the data intended for a particular substation are put into a particular sub-frame.

9. A substation (4 to 7) for use in a telecommunications network (1) adapted for communication with a predetermined bit rate with a main station (2) via a transmission channel (22) on the basis of a multiple access protocol (TDMA), characterised in that the substation is arranged for receiving bit interleaved data in a data-frame from the main station (2), the bit interleaved data being bit interleaved data from logical sub-frames of data intended for particular substations, whereby the data-frame further comprises substation characterising data, and in that the substations comprise means (56, 57) for adjusting themselves to reception of data in the sub-frame intended for them on the basis of the substation characterising data.

10. A substation according to claim 9, wherein the substation characterising data comprise a general synchronisation word followed by a substation type identifier, and the substation comprises synchronisation means for synchronising itself to the synchronisation word, and comprises phase adjustment means (58, 71) for adjusting its receiving phase to a correct receiving phase if the received substation type identifier does not match with a type at which the substation is adjusted.

## Patentansprüche

1. Telekommunikationsnetzwerk (1) mit einer Hauptstation (2) und einer Anzahl Nebenstationen (4 bis 7), wobei in diesem Netzwerk (1) zwischen der Hauptstation (2) und den Nebenstationen (4 bis 7) Kommunikation in einem Datenframe mit einer vorbestimmten Bitrate über einen Übertragungskanal (3; 22) stattfindet, und zwar auf Basis eines Mehrfachzugriffprotokolls, wobei dieser Kanal (22) wenigstens teilweise den Nebenstationen (4 bis 7) gemeinsam ist, dadurch gekennzeichnet, dass die Hauptstation (2) Mittel aufweist zum Trennen von Daten (30, 31, 25, 26) bestimmt für Nebenstationen in wenigstens zwei logische Unterframes, und Mittel zum Zusammensetzen (27) der Unterframes zu dein Datenframe, so dass das Datenframe eine bitverschachtelte Zusammensetzung von Unterframes aufweist und zum Zusammensetzen eine Nebenstation kennzeichnender Daten zu dem Datenframe, wobei die Daten für eine bestimmte Nebenstation in ein bestimmtes Unterframe gegeben werden, und dass die Nebenstationen Mittel aufweisen um sich selber einzustellen (56, 57) für den Empfang von Daten in dem Unterframe, die für sie bestimmt sind, und zwar auf Basis der die Nebenstation kennzeichnenden Daten.

2. Netzwerk (1) nach Anspruch 1, wobei die Nebenstationen (4 bis 7) der Hauptstation (2) Daten in einem Zeitschlitz innerhalb des Datenframes an einer Stelle zusenden, die deren Einstellung gegenüber den empfangenen Daten von der Hauptstation entspricht, und wobei die Hauptstation (2) Mittel aufweist zum Zerlegen (55, 61, 69) bitverschachtelter Daten in dem Bitframe zu wenigstens zwei logischen Unterframes von Daten von bestimmten Nebenstationen, und Mittel aufweisen zum Kombinieren (61, 69) der Unterframes.

3. Netzwerk (1) nach Anspruch 2, wobei die Mittel zum Zusammensetzen und zum Zerlegen einzelne Mittel sind, die mit der vorbestimmten Bitrate arbeiten, die durch n geteilt wird, wobei n die Anzahl logischer Unterframes ist, wobei die logischen Unterframes physikalische Unterframes sind, und wobei die Mittel zum Trennen und Kombinieren mit der vorbestimmten Bitrate arbeiten.

4. Netzwerk (1) nach Anspruch 2, wobei die Mittel zum Zusammensetzen und Zerlegen und die Mittel zum Trennen und Kombinieren integrierte Mittel sind, die mit der vorbestimmten Bitrate arbeiten.

5. Netzwerk nach einem der Ansprüche 1 bis 4, wobei die eine Nebenstation kennzeichnenden Daten ein allgemeines Synchronisationswort mit einem nachfolgenden Identifizierer des Nebenstationstyps.

6. Netzwerk nach einem der Ansprüche 1 bis 4, wobei die Anzahl logischer Unterframes zwei beträgt, und wobei die eine Nebenstation kennzeichnenden Daten ein erstes Synchronisationswort für einen ersten Nebenstationstyp und ein zweites Synchronisationswort für einen zweiten Nebenstationstyp sind, wobei das zweite Synchronisationswort das Umgekehrte des ersten Synchronisationswortes ist.

7. Netzwerk nach einem der Ansprüche 1 bis 6, wobei die Nebenstationen sich selbst einstellen auf eine eigene Phase in der bitverschachtelten Zusammensetzung von Unterframes auf Basis der von der Hauptstation in einem Systemverwaltungs-Zeitschlitz empfangenen Phaseneinstellungsdaten.

8. Hauptstation (2) zum Gebrauch in einem Telekommunikationsnetzwerk (1) zur Kommunikation von Daten in einem Datenframe mit einer vorbestimmten Bitrate zu Nebenstationen (4 bis 7) innerhalb des Netzwerkes (1) über einen Übertragungskanal (22) auf Basis eines Mehrfachzugriffsprotokolls (TDMA), wobei der Kanal (22) wenigstens teilweise den Nebenstationen (4 bis 7) gemeinsam ist, dadurch gekennzeichnet, dass die Hauptstation (2) Mittel aufweist zum Trennen von Daten (25, 26) für Nebenstationen in wenigstens zwei logische Unterframes, und Mittel zum Zusammensetzen (27) der Unterframes zu dem Datenframe, und zwar derart, dass das Datenframe eine bitverschachtelte Zusammenseztung von Unterframes hat und zum Zusammensetzen von eine Nebenstation kennzeichnenden Daten zu dem Datenframe, wobei die Daten für eine bestimmte Nebenstation zu einem bestimmten Unterframe zusammengenommen werden.

9. Nebenstation (4 bis 7) zum Gebrauch in einem Telekommunikationsnetzwerk (1) zur Kommunikation mit einer vorbestimmten Bitrate mit einer Hauptstation (2) über einen Übertragungskanal (22) auf Basis eines Mehrfachzugriffsprotokolls (TDMA), dadurch gekennzeichnet, dass die Nebenstation bitverschachtelte Daten in einem Datenframe von der Hauptstation (2) empfängt, wobei die bitverschachtelten Daten bitverschachtelte Daten von logischen Unterframes von Daten für bestimmte Nebenstationen sind, wobei das Datenframe weiterhin eine Nebenstation kennzeichnende Daten aufweist, und dass die Nebenstationen Mittel (56, 57) aufweisen um sich selbst einzustellen auf Empfang von Daten in dem Unterframe für sie auf Basis der eine Nebenstation kennzeichnenden Daten.

10. Nebenstation nach Anspruch 9, wobei die eine Nebenstation kennzeichnenden Daten ein allgemeines Synchronisationswort mit einem nachfolgenden Nebenstationstyp-Identifizierer, und die Nebenstation Synchronisationsmittel aufweist um sich selbst zu dem Synchronisationswort zu synchronisieren, und Phaseneinstellmittel (58, 71) aufweist um ihre Empfangsphase auf eine einwandfreie Empfangsphase einzustellen, wenn der empfangene Nebenstationstyp-Identifizierer einem Typ, auf den die Nebenstation eingestellt ist, nicht entspricht.

## Revendications

1. Réseau de télécommunication (1) comportant une station principale (2) et une pluralité de sous-stations (4 à 7), réseau (1) dans lequel de la communication entre la station principale (2) et les sous-stations (4 à 7) se présente dans une trame de données avec un débit binaire prédéterminé par l'intermédiaire d'une voie de transmission (3; 22) sur la base d'un protocole à accès multiple, ladite voie (22) étant au moins partiellement commune aux sous-stations (4 à 7), caractérisé en ce que la station principale (2) comporte des moyens pour diviser des données (30, 31, 25, 26) destinées à des sous-stations en au moins deux sous-trames logiques et des moyens pour assembler (27) les sous-trames dans la trame de données de telle façon que la trame de données comprenne une composition à entrelacement de bits de sous-trames et pour assembler des données caractérisant les sous-stations dans la trame de données, les données destinées à une sous-station particulière étant introduites dans une sous-trame particulière, et en ce que les sous-stations comportent des moyens pour s'ajuster elles-mêmes (56, 57) à la réception de données dans la sous-trame y étant destinée sur la base des données caractérisant les sous-stations.

2. Réseau (1) selon la revendication 1, où les sous-stations (4 à 7) sont agencées de manière à envoyer des données à la station principale (2) dans un créneau temporel dans la trame de données dans une position correspondant à leur réglage par rapport aux données reçues de la station principale et où la station principale (2) comporte des moyens pour désassembler (55, 61, 69) des données à entrelacement de bits dans la trame de données jusqu'à au moins deux sous-trames logiques de données en provenance de sous-stations particulières, et comporte des moyens pour combiner (61, 69) les sous-trames.

3. Réseau (1) selon la revendication 2, où les moyens pour assembler et pour désassembler sont des moyens individuels fonctionnant au débit binaire prédéterminé divisé par n, n étant le nombre de sous-trames logiques, les sous-trames logiques étant des sous-trames physiques, et où les moyens pour diviser et pour combiner fonctionnent au débit binaire prédéterminé.

4. Réseau (1) selon la revendication (2), où les moyens pour assembler et pour désassembler, et les moyens pour diviser et pour combiner sont des moyens intégrés fonctionnant au débit binaire prédéterminé.

5. Réseau selon l'une quelconque des revendications précédentes 1 à 4, où les données caractérisant les sous-stations comprennent un mot de synchronisation général suivi d'un identificateur de type de sous-station.

6. Réseau selon l'une quelconque des revendications précédentes 1 à 4, où le nombre de trames logiques est égal à deux, et où les données caractérisant les sous-stations sont un premier mot de synchronisation pour un premier type de sous-station et un deuxième mot de synchronisation pour un deuxième type de sous-station, le deuxième mot de synchronisation étant l'inverse du premier mot de synchronisation.

7. Réseau selon l'une quelconque des revendications précédentes 1 à 6, où les sous-stations s'ajustent elles-mêmes à une phase particulière dans la composition à entrelacement de bits de sous-trames sur la base de données de réglage de phase reçues de la station principale dans un créneau temporel de service.

8. Station principale (2) pour être utilisée dans un réseau de télécommunication (1) adapté pour la communication de données dans une trame de données avec un débit binaire prédéterminé à des sous-stations (4 à 7) dans le réseau (1) par l'intermédiaire d'une voie de transmission (22) sur la base d'un protocole à accès multiple (TDMA), ladite voie (22) étant au moins partiellement commune aux sous-stations (4 à 7), caractérisée en ce que la station principale (2) comporte des moyens pour diviser des données (25, 26) destinées à des sous-stations en au moins deux sous-trames logiques, et des moyens pour assembler (27) les sous-trames dans la trame de données de façon que la trame de données comprenne une composition à entrelacement de bits de sous-trames et pour assembler des données caractérisant les sous-stations dans la trame de données, les données destinées à une sous-station particulière étant introduites dans une sous-trame particulière.

9. Sous-station (4 à 7) pour être utilisée dans un réseau de télécommunication (1) adapté pour la communication avec un débit binaire prédéterminé à une station principale (2) par l'intermédiaire d'une voie de transmission (22) sur la base d'un protocole à accès multiple (TDMA), caractérisée en ce que la sous-station est agencée de manière à recevoir des données à entrelacement de bits en provenance de la station principale (2) dans une trame de données, les données à entrelacement de bits étant des données à entrelacement de bits en provenance de sous-trames logiques de données destinées à des sous-stations particulières, la trame de données comprenant encore des données caractérisant les sous-stations, et en ce que les sous-stations comportent des moyens (56, 57) pour s'ajuster elles-mêmes à la réception de données dans la sous-trame y étant destinée sur la base de données caractérisant les sous-stations.

10. Sous-station selon la revendication 9, où les données caractérisant les sous-stations comprennent un mot de synchronisation général suivi d'un identificateur de type de sous-station, et où la sous-station comporte des moyens de synchronisation pour synchroniser elle-même avec le mot de synchronisation, et comporte des moyens de réglage de phase (58, 71) pour régler sa phase de réception à une phase de réception correcte si l'identificateur de type de sous-station reçu ne correspond pas à un type auquel est réglée la sous-station.
